(19) Europäisches Patentamt

European Patent Office

Office européen des brevets

(11) **EP 4 531 042 A1**

(12) **EUROPEAN PATENT APPLICATION**

(43) Date of publication:
**02.04.2025 Bulletin 2025/14**

(21) Application number: **23200672.6**

(22) Date of filing: **28.09.2023**

(51) International Patent Classification (IPC):
**G10L 25/30** (2013.01)   **G10L 21/0208** (2013.01)
**G10L 21/0232** (2013.01)   **G06N 3/00** (2023.01)

(52) Cooperative Patent Classification (CPC):
**G10L 25/30; G06N 3/044; G06N 3/08;
G10L 21/0208;** G06N 3/045; G10L 21/0232

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Tape It Music GmbH
12459 Berlin (DE)**

(72) Inventors:
• **Steinmetz, Christian
12459 Berlin (DE)**

• **Walther, Thomas
12459 Berlin (DE)**

(74) Representative: **Eisenführ Speiser
Patentanwälte Rechtsanwälte PartGmbB
Stralauer Platz 34
10243 Berlin (DE)**

Remarks:
A request for correction of the description has been
filed pursuant to Rule 139 EPC. A decision on the
request will be taken during the proceedings before
the Examining Division (Guidelines for Examination
in the EPO, A-V, 3.).

(54) **NOISE REDUCTION SYSTEM FOR DYNAMIC NOISE REDUCTION**

(57)    The invention relates to a noise reduction system (10) for dynamic noise reduction. The noise reduction system (10) comprises an input for an incoming audio signal and an audio out-put for providing a noise reduced out-put audio signal. The noise reduction system (10) further comprising a parametric noise reduction unit (12) that is configured to perform a noise reduction according to operation parameters, the values thereof being at least in part adjustable. The noise reduction system (10) further comprises or is connected to a trained neural network controller unit (14) that is configured to process input data generated from the incoming audio signal and to generate operation parameter values for dynamically controlling the parametric noise reduction unit.

self adjusting noise reduction system

Fig. 1

EP 4 531 042 A1

**Description**

The invention relates to a noise reduction system for dynamic noise reduction that processes an incoming audio signal and generates a noise-reduced (denoised) output audio signal. The invention further relates to a method for dynamic noise reduction.

Noise reduction techniques based on deep learning have shown impressive capabilities in enhancing the quality of recorded speech in a fully automated manner. Despite their impressive performance, these approaches face limitations that hinder their application in audio engineering. These limitations include their exclusive focus on speech, inability to handle music signals, lack of real-time processing, absence of interpretable control parameters, operation at lower sample rates, and a tendency to introduce artifacts in challenging scenarios.

On the other hand, traditional signal processing noise reduction algorithms offer finegrained control and can work with a wide range of content, but they often necessitate manual intervention to achieve optimal results.

Traditional noise reduction techniques, such as the Wiener filter [Wiener, N., Extrapolation, interpolation, and smoothing of stationary time series, with engineering applications, MIT Press, 1964], spectral subtraction [Boll, S., "Suppression of acoustic noise in speech using spectral subtraction," IEEE TASLP, 27(2), 1979], and spectral gating [Hicks, C. and Reid, G., "The evolution of broadband noise reduction techniques," in AES, 1996] increase the signal-to-noise ratio by exploiting assumptions about the statistics of the source and noise signals. These approaches employ different methods for estimating the statistics of the noise and may make assumptions about the noise statistics, such as stationarity, both of which can be a limiting factor of performance. However, when operated by experienced users, commercial tools based on these methods, such as iZotope RX Spectral Denoise, are capable of transparent noise reduction in many scenarios.

Recently, deep learning approaches have demonstrated superior performance in the joint task of noise reduction and de-reverberation of speech, often referred to as speech enhancement [Yuliani, A. R., Amri, M. F., Suryawati, E., Ramdan, A., and Pardede, H. F., "Speech enhancement using deep learning methods: A review," Jurnal Elektronika dan Telekomunikasi, 21(1), 2021]. These approaches can overcome the limitations of signal processing techniques since they use data to train large estimators that make fewer assumptions. However, speech enhancement models cannot be directly used to enhance the quality of other sources, such as musical instruments, since they have been trained to extract or generate only speech. As a result, enhancing music signals with speech enhancement models often results in the removal of musical sources or the introduction of corruptions, such as transforming instruments into pseudo-speech utterances or changing the pitch of vocals.

The related task of music enhancement has so far been less studied. Recent works have considered adapting the training objective for speech enhancement models to focus on music signals [Kandpal, N., Nieto, O., and Jin, Z., "Music enhancement via image translation and vocoding," in ICASSP, 2022; Moliner, E. and Välimäki, V., "A two-stage u-net for highfidelity denoising of historical recordings," in ICASSP, 2022; Chae, Y., Koo, J., Lee, S., and Lee, K., "Exploiting Time-Frequency Conformers for Music Audio Enhancement," arXiv:2308.12599, 2023]. While these approaches can enhance music signals, they suffer from many of the same limitations of existing deep learning-based speech enhancement systems, namely operation at lower sample rates, the introduction of artifacts, high compute cost, and lack of parametric control. These limit the applicability of such algorithms in the context of audio engineering.

It is an object of the invention to provide an improved system and an improved method for dynamic noise reduction in audio signals.

According to a first aspect, a noise reduction system for dynamic noise reduction is provided that comprises an input for an incoming audio signal and an audio output for providing a noise reduced output audio signal. The noise reduction system further comprises a parametric noise reduction unit (also referred to as a denoiser) that is configured to perform a noise reduction according to operation parameters wherein at least a part of the operation parameter values are adjustable.

The noise reduction system further comprises or is connected to a trained neural network controller unit that is configured to process input data generated from the incoming audio signal and to generate operation parameter values for dynamically controlling the parametric noise reduction unit.

The incoming audio signal and the noise reduced output audio signal preferably are digital signals that represent a sound signal.

The invention includes the insight that a novel approach that combines the strengths of both traditional signal processing noise reduction processors and noise reduction techniques based on deep learning paradigms can overcome the drawbacks of both deep learning-based approaches and traditional signal processing approached. The new approach incorporates a signal processing-based parametric noise reduction unit (denoiser), which, when coupled with a neural network controller unit, enables fully automatic noise reduction. Through this integration, efficient and high-fidelity noise reduction for any type of audio signals, including speech and music signals, is achieved. This is in stark contrast to algorithms that work only on speech.

To validate the effectiveness of the new approach, a comprehensive evaluation using objective metrics and a perceptual listening test was conducted. The evaluation demonstrates that deep learning systems designed for speech enhancement can be extended to encompass music signals while maintaining their high performance when trained only to remove stationary noise signals. Furthermore, the new approach achieves comparable results to those of deep learning models while being significantly more efficient and introducing fewer artifacts in certain scenarios.

The invention addresses different aspects:

Firstly, like in previous works, speech enhancement models are extended for noise reduction of music signals. It was found that standard enhancement pipelines that include removal of both stationary and non-stationary noise are problematic. The inventors found that these pipelines produce models with more artifacts as compared to models trained to remove only stationary noise.

Secondly, a hybrid signal processing and deep learning approach is proposed that is capable of full-band noise reduction for stereo signals consisting of speech, music, and general audio. Unlike previous hybrid approaches, the method disclosed herein utilizes differentiable signal processing to train with the noise reduction unit in the loop. The proposed audio noise reduction system is not limited to stereo signals. The noise reduction system simply takes left and right and either

a) processes them separately with individual parameters or

b) analyses both, takes the average of the parameters and applies them to both channels.

Either approach will scale to multi-channel audio

Thirdly, in the design of this hybrid approach, it could be demonstrated that existing differentiable approximations of dynamic range processor ballistics are insufficient. This was circumvented by using gradient approximation schemes, which were made scalable with a two-stage training process.

The noise reduction system for dynamic noise reduction comprises two primary components:

- a signal processing-based noise reduction unit (denoiser) that implements a signal processing-based noise reduction algorithm and

- a neural network controller unit that dynamically estimates the control parameters for the signal processing-based noise reduction unit, based on the characteristics of the input noisy signal.

Preferably, the noise reduction unit implements a signal processing-based spectral gating noise reduction algorithm based on spectral gating, also referred to as spectral expansion. This technique involves applying a multi-band expansion to the input signal, where the threshold in each frequency band is determined by estimating the level of the noise in the respective band. When the energy in a band falls below the threshold, the gain for that band is reduced, thereby increasing the overall signal-to-noise ratio. However, achieving high-quality denoising with spectral gating often demands manual identification of the noise spectrum and fine-tuning of the operation parameters of the dynamic noise reduction unit (expander parameters), such as attack and release times, and the ratio, for each new recording.

To address these challenges, the neural network controller unit is configured to estimate both the noise spectrum and the operation parameters of the dynamic noise reduction unit (expander parameters) from the spectrogram of the noisy incoming audio signal. The operation parameter values of the dynamic noise reduction unit (expander parameter values) include a gain value for each frequency band. Further operation parameters may be for instance attack and release times.

The neural network controller unit preferably comprises multiple neural network subsystems.

Preferably, the neural network controller unit is composed of three major components:

- an audio pre-processor,

- a convolutional-recurrent feature extractor, and

- specialized parameter estimation heads.

Accordingly, in a preferred embodiment, the trained neural network controller unit comprises a convolutional neural network trained as feature extractor, wherein the convolutional neural network is configured to process CNN input data representing a spectrogram of the incoming audio signal and to generate feature maps of the audio input signal.

According to a further preferred embodiment, the trained neural network unit comprises a Long Short-Term Memory (LSTM) neural network that is configured to process a sequence of feature maps generated by the convolutional neural network and to produce latent representations z.

In the preferred embodiment, wherein the trained neural network controller unit comprises at least two specialized parameter estimation heads, a first parameter estimation head preferably is configured for estimating the noise spectrum and a second parameter estimation head preferably configured for estimating the operation parameters of the parametric noise reduction unit (expander parameters).

Preferably, the least two specialized parameter estimation heads are configured to process latent representations z produced by the Long Short-Term Memory (LSTM) neural network.

Preferably, the first specialized parameter estimation head for predicting the operating parameters is a neural network that is configured as a simple 3-layer multi-layer perceptron (MLP), which operates on the latent representations z produced by the Long Short-Term Memory (LSTM) neural network.

Preferably, the second specialized parameter estimation head for estimating the energy of the noise T(b) in each frequency band of the dynamic noise reduction unit is implemented as a conditional implicit neural representation (INR), which comprises a combination of linear layers with sinusoidal activation functions, along with a modulator network.

The neural network controller unit aims to extract relevant features from a noisy input signal x(n) in order to estimate both the spectrum of the noise across the denoiser frequency bands $\hat{T}(b)$ and the optimal noise reduction unit parameters $\hat{P} = \{C_A, C_R, W, R, G\}$ to effectively reduce the stationary noise component while introducing minimal artifacts.

The audio pre-processing as performed by the audio pre-processor preferably first transforms the time domain signal via short time Fourier transformation (STFT). This is preferably followed by projection onto the mel-basis and exponential scaling with $|X|^\beta$. Finally, before passing the spectrogram to the feature extractor preferably a Std-Norm,

$$|Xp| = \frac{|X| - \mu}{\sigma}$$

, is applied, which normalizes the magnitude spectrogram by its mean □ and standard deviation □.

As a core component of the neural network controller unit, a convolutional neural network, for instance a MobileNetV2 or MobileNetV3, is implemented as a feature extractor. The convolutional neural network is configured and trained to process spectrograms of the incoming audio signal and to generate (spectrum) feature maps therefrom. Subsequently, a Long Short-Term Memory (LSTM) network processes the sequence of (spectrum) feature maps generated by the convolutional neural network.

The main component of the neural network controller unit is a convolutional neural network, for instance a MobileNetV3 [Howard, A., Sandler, M., Chu, G., Chen, L.-C., Chen, B., Tan, M., Wang, W., Zhu, Y., Pang, R., Vasudevan, V., et al., "Searching for mobilenetv3," in CVPR, 2019], which is adapted by removing all BatchNorm layers, and modified to the input layer to operate on magnitude spectrograms as images with one channel. The output of the convolutional neural network, for instance the MobileNetV3, is a 3-dimensional down-sampled feature map. Average pooling is applied across the frequency dimension to produce a 2-dimensional representation of size D×S, where D is the feature dimension and S is the down-sampled sequence length. This representation is then passed through a linear layer, shared across the temporal dimension, to reduce the feature dimension to a reduced feature dimension $D_r$. To provide information about the absolute scale of the input the frame-wise values of mean □ and standard deviation □ are concatenated to the representation in the reduced feature dimension $D_r$ and then passed through a Long short-term memory (LSTM) to produce the final sequence of latent representations $z \, \mathbb{R}^{Dr \times S}$.

Finally, according to a preferred embodiment, at least two specialized parameter estimation heads are responsible for estimating the noise spectrum and the operation parameters of the dynamic noise reduction unit (expander parameters) $\hat{P}$, respectively.

The first parameter estimation head is a neural network $g_P$ that preferably is configured for predicting the noise reduction unit parameters $\hat{P}$ and preferably is configured as a simple 3-layer multi-layer perceptron (MLP), which operates on the latent representation $z$.

The second parameter estimation head is a neural network $g_T$ that preferably is configured for estimating the energy of the noise in each frequency band of the noise reduction unit $T(b)$. This second network preferably is implemented as a conditional implicit neural representation (INR), which preferably features a combination of linear layers with sinusoidal activation functions, along with a modulator network. The modulator network produces scaling values for the intermediate feature representations of the INR based upon z, while f represents a set of frequency index values at which the network is estimating the energy of the noise spectrum. The network architecture is motivated by the fact that the noise spectrum can itself be modelled as a continuous signal across the frequency range.

The neural network controller unit is trained by mixing noise with clean signals. The system is trained to estimate the clean signal using a reconstruction loss. However, this training process presents a challenge due to the need for backpropagation through the noise reduction unit, which is non-trivial. To overcome this, a two-stage approach is used. In the first stage, the convolutional neural network is trained to exclusively estimate the noise spectrum by directly regressing the spectrum of the ground truth noise, eliminating the necessity to operate the noise reduction unit. After this pretraining phase, the weights of the convolutional neural network are frozen and the MLP responsible for estimating the noise reduction unit control parameters is trained. To tackle the non-differentiability of the noise reduction unit, a gradient approximation method is employed. While this approach is generally prone to getting stuck in local minima and overall slower convergence, it was found that the pretraining phase significantly enhances performance and convergence speed during this training phase.

According to a second aspect, a method for dynamic noise reduction is provided. The method comprises the steps of:

- feeding an input audio signal to both a dynamic noise reduction unit and a neural network controller unit

- performing parametric noise reduction in multiple frequency bands of an input audio signal by applying operation parameters for each frequency band, thus generating a denoised output audio signal,

- dynamically determining the operation parameters for each frequency band by means of a trained neural network controller unit, and

- applying the dynamically determined operation parameters for each frequency band in the dynamic noise reduction of the input audio signal.

The parametric noise reduction preferably includes a spectral expansion in multiple frequency bands of an input audio signal.

The operation parameters preferably include an individual gain reduction value for each frequency band.

The individual gain reduction values for the frequency bands preferably are determined by means of a trained neural network controller unit.

Preferably, parametric noise reduction in multiple frequency bands of an input audio signal is performed by applying a signal processing-based spectral gating noise reduction algorithm.

In summary, the new approach combines the strengths of a signal processing-based spectral gating noise reduction unit with a neural network controller to achieve dynamic and automated noise reduction. By integrating the two components, the challenges posed by manual parameter tuning while providing high-quality denoising for both speech and music signals (indeed, for any kind of audio, including but not limited to speech, film audio, field recordings and more) are effectively tackled. The training process, with its two-stage approach, allows to overcome the complexities of backpropagation through the noise reduction unit and optimize the controller efficiently. Through thorough evaluation, the inventors could demonstrate the effectiveness and potential of the new method in achieving state-of-the-art noise reduction performance inter alia in audio engineering applications.

The invention shall be further illustrated by way of example with reference to the figures. Of the figures,

Fig. 1:     illustrates the main components of the dynamic noise reduction system according to the invention;

Fig. 2:     is an exemplary and schematically illustration of a self adjusting neural network controlled noise reduction system according to the invention;

Fig. 3:     is an alternative exemplary and schematic representation of a self adjusting neural network controlled noise reduction system according to the invention;

Fig. 4:     is an exemplary and schematic illustration of the noise reduction unit (multi-band spectral expander) of the self adjusting neural network controlled noise reduction system according to the invention;

Fig. 5:     is an exemplary and schematic illustration of an audio processor as a component of a neural network controller unit for self adjusting neural network controlled noise reduction system according to the invention;

Fig. 6:     is an exemplary and schematically illustration of a convolutional-recurrent feature extractor as a component of a neural network controller unit for self adjusting neural network controlled noise reduction system according to the invention, said convolutional-recurrent feature extractor receiving the output of the audio processor as illustrated in figure 4;

Fig. 7:     is an exemplary and schematic illustration of two parameter estimation heads as components of a neural network controller unit for self adjusting neural network controlled noise reduction system according to the invention, said parameter estimation heads receiving the output of the convolutional-recurrent feature extractor as illustrated in figure 6;

Fig. 8: is an exemplary and schematic illustration of a first training stage of the self adjusting neural network controlled noise reduction system according to the invention;

Fig. 9: an exemplary and schematic illustration of a second training stage of the self adjusting neural network controlled noise reduction system according to the invention;

Fig. 10: is an illustration of the gain reduction produced by a dynamic range compressor using a recursive branching filter compared to the approximate ballistics;

Fig. 11: is an illustration of the scores across the eleven stimuli shown in table 2; and

Fig. 12: illustrates a method according to the invention.

A noise reduction system 10 according to the invention comprises a noise reduction unit 12 and a controlling neural network unit 14. An incoming audio signal x(n) that may comprise noise is fed to both, the noise reduction unit 12 and the controlling neural network unit 14. Preferably, an incoming audio signal x(n) is fed to the controlling neural network unit 14 via an audio preprocessor 14.1.

The dynamic noise reduction unit 12 is a parametric noise reduction unit 12 that is configured to perform a noise reduction according to operation parameters. The values of the operation parameters are at least in part adjustable. Preferably, the dynamic noise reduction unit 12 is a parametric multi-band spectral expander that implements a signal processing-based spectral gating noise reduction algorithm. Accordingly, the incoming audio signal x(n) is first transformed into a frequency domain representation, for instance by means of a Fourier transformation, in particular a short time-Fourier transformation (STFT) that splits the time domain audio signal into overlapping windows with a hop size H and then preferably forms a discrete Fourier transformation (DFT) for each window with a fast Fourier transformation (FFT) size N. Thus, a frequency domain representation $X(t, f)$ of the input audio signal is produced. The spectral gating noise reduction then can apply different gain reduction values for each frequency band. It is noted, that spectrogram, spectrogram representation, spectral representation and frequency domain representation are herein used as synonyms.

After applying the gain reduction to the frequency bands, and outgoing denoised audio signal is produced by means of an inverse Fourier transformation (iFT), in particular an inverse short-time Fourier transformation (iSTFT) to produce the time-domain output audio signal $\hat{y}(n)$ of the noise reduction unit 12. The neural network controlling unit 14 comprises (at least) three major components for generating the parameter values for the noise reduction unit 12, in particular the individual gain reduction values for each individual frequency band in real time.

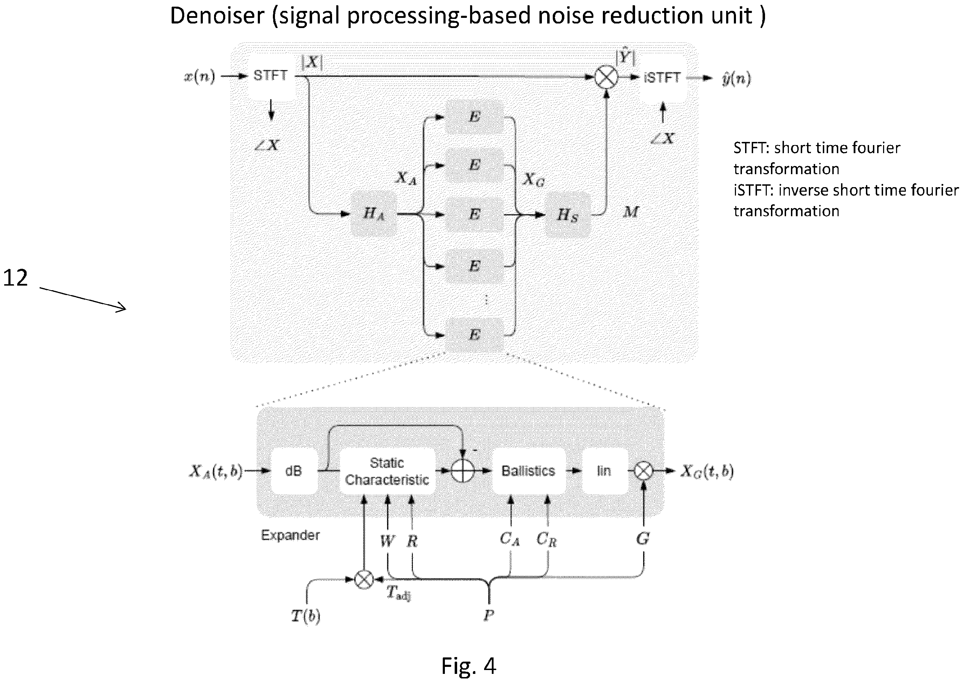

An illustration of the single processing-based noise reduction unit 12 (also called denoiser herein) is found in Figure 4.

The controlling neural network unit 14 preferably comprises at least three major components:

- the audio preprocessor 14.1,

- a convolutional-recurrent feature extracting neural network (CNN) 14.2, and

- at least one, preferably two or more specialized parameter estimation heads 14.4.

The audio pre-processor 14.1 is configured to transform the incoming audio signal x(n) (which is a time domain signal) into a frequency domain signal via short-time Fourier transformation (STFT), thus generating a spectral representation of the incoming audio signal; i.e. a spectrogram of the incoming audio signal.

This spectral representation $|X_P|$ is fed to the convolutional recurrent feature extractor 14.2 that produces a feature map. The feature map is forwarded to a long short-term memory (LSTM) neural network that produces a latent representation z of the incoming audio signal. The latent representation z is fed to a first specialized parameter estimation head 14.4.1 for predicting the operation parameters P, including at least gain reduction values, for the noise reduction unit. Further operation parameter values P may include attack and release time values. The first specialized parameter estimation head 14.4.1 is a neural network that preferably is configured as a multi-layer perceptron (MLP) with three layers. The first specialized parameter estimation head 14.4.1 operates on the latent representation z produced by the long short-term memory (LSTM) neural network 14.3 and generates operation parameters P for the dynamic noise reduction unit 12.

The second specialized parameter estimation head 14.4.2 is configured for estimating the energy of the noise $\hat{T}(b)$ in each frequency band of the incoming audio signal. The frequency bands correspond to those the dynamic noise reduction 12 operates on. The second specialized parameter estimation head 14.4.2 preferably is implemented as a conditional implicit new representation (INR), which comprises a combination of linear layers with sinusoidal activation functions, along with the modular network. An alternative implementation of the second specialized parameter estimation head 14.4.2 is also by way of a multi-layer perceptron (MLP).

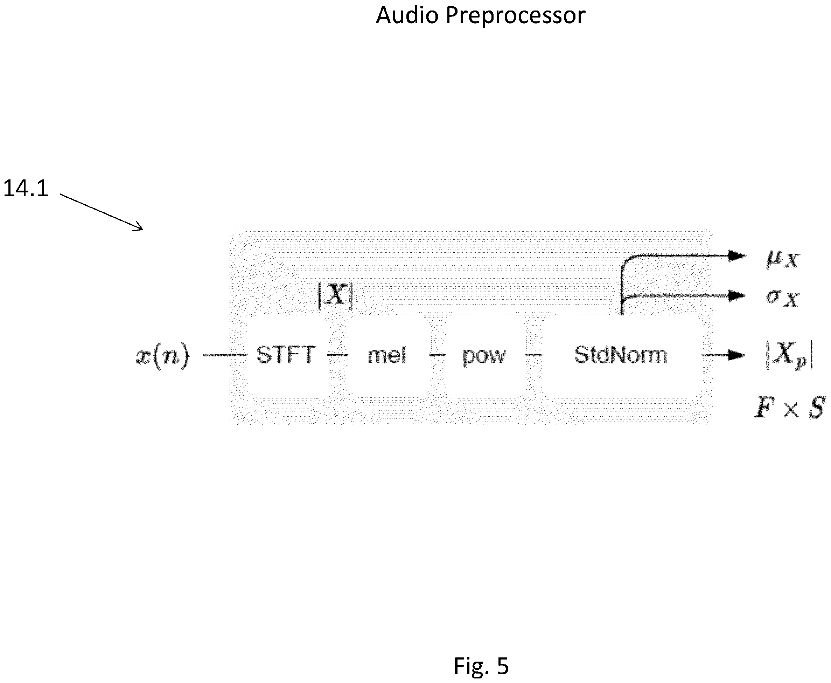

Details of preferred implementations are now described with reference to Figures 5, 6 and 7.

The noisy signal model in the time domain is given by

$$x(n) = y(n)+w(n) \qquad (1)$$

where $x(n)$ is the noisy signal, $y(n)$ is the original signal, and $w(n)$ is the additive noise with n as the discrete time index. In the noise reduction task, the object is to produce an estimate of the clean signal $\hat{y}(n)$ that is perceptually similar to the original clean signal.

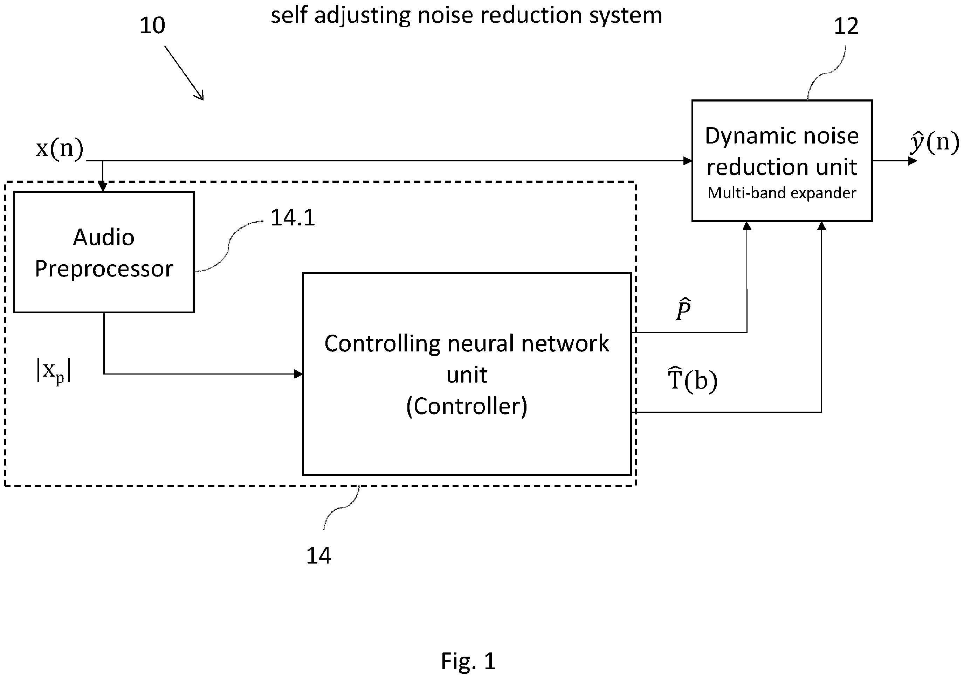

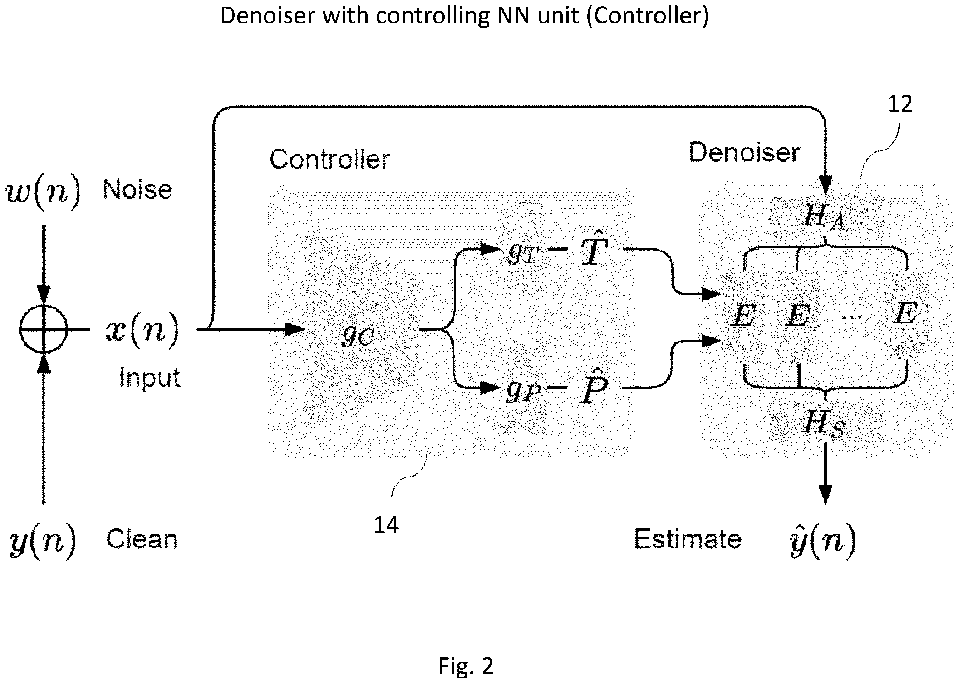

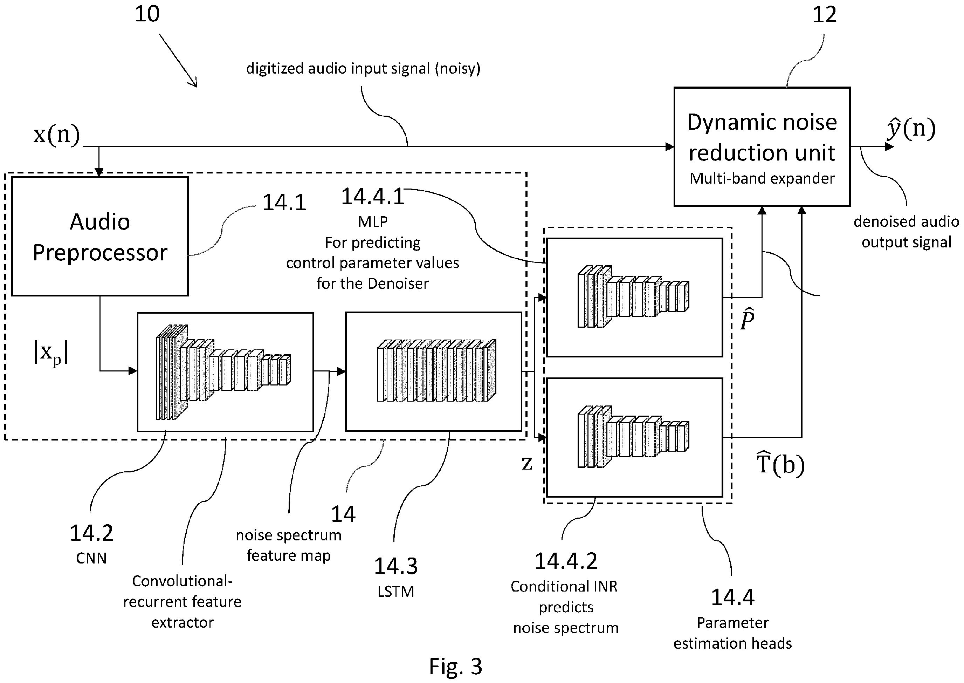

As shown in Figures 1, 2 and 3 the noise reduction system is composed of two subsystems: a signal processing noise reduction unit and a neural network controller unit, which is trained to estimate time-varying controls for the noise reduction unit. It is composed of a main network $g_C$ featuring a convolutional recurrent architecture, as well as two prediction networks $g_T$ and $g_P$, which estimate the spectrum of the noise $\hat{T}(b)$ across B bands, as well as the noise reduction unit control parameters $\hat{P}$. The noise reduction unit employs spectral gating [Hicks, C. and Reid, G., "The evolution of broadband noise reduction techniques," in AES, 1996], using a set of filterbanks and respective dynamic range expanders in order to reduce the audibility in noise across different frequency bands of the input. Unlike recent speech enhancement models that use a large neural network to both analyze and process the noisy audio signal, the proposed approach uses a neural network to first analyze the signal and estimate control parameters, while the audio signal is processed using only the signal processing noise reduction unit. This enables improved efficiency at high sample rates as well as interpretable control parameters that can be used to fine-tune the noise reduction. Furthermore, this enables the restriction of the minimum and maximum values of certain parameters, such as the attack and release times, which ensures that even in challenging scenarios the proposed noise reduction unit will not act too aggressive, helping to avoid artifacts.

Signal processing noise reduction unit; see Fig. 4

The noise reduction system uses a noise reduction unit based upon spectral gating, also known as spectral expansion [Moorer, J. A. and Berger, M., "Linear-phase bandsplitting: Theory and applications," JAES, 34(3), 1986; Hicks, C. and Reid, G., "The evolution of broadband noise reduction techniques," in AES, 1996]. Unlike spectral subtraction, where each time frame is treated the same by subtracting a constant energy from each magnitude frequency bin [Boll, S., "Suppression of acoustic noise in speech using spectral subtraction," IEEE TASLP, 27(2), 1979], spectral expansion applies a time-varying gain reduction across a set of frequency bands as a function of the energy in each band. The inventors opt for this approach since spectral subtraction is known to introduce musical noise artifacts [Lukin, A. and Todd, J., "Suppression of musical noise artifacts in audio noise reduction by adaptive 2-D filtering," in AES, 2007], and the initial testing indicated that spectral gating produces less artifacts when optimal control parameters were selected.

The noise reduction unit (i.e. the spectral expander) is composed of a set of filterbanks and dedicated band-wise expanders, as shown in Fig. 4. To carry out processing in the frequency domain a short-time Fourier transform (STFT) is employed, splitting the time domain signal into overlapping windows with hop size H, and taking the discrete Fouriertransform (DFT) of each window with fast Fourier transform (FFT) size N. This produces a frequency domain representation of the input $X(t,f)$ where $t$ corresponds to the time frame index and $f$ corresponds to the frequency index.

The noise reduction unit operates on the magnitude spectrogram $|X| \in \mathbb{R}^{T \times F}$ where $F$ is the number of frequency bins and $T$ is the number of time frames. After transforming the input signal to the frequency domain, the next step is to separate the magnitude spectrogram into a set of perceptually spaced frequency bands. This is achieved with the analysis filterbank, which is given by a matrix $H_A$ $\mathbb{R}^{T \times B}$, which is used to produce a new spectrogram representation $X_A = |X|^T H_A$, a representation of the energy within each band.

Next, an independent dynamic range expander operates on each frequency band. The design follows from the digital dynamic range compressor [Giannoulis, D., Massberg, M., and Reiss, J. D., "Digital dynamic range compressor design - A tutorial and analysis," JAES, 60(6), 2012]. The signal in each band is first converted to the log domain and then fed to the gain computer. The gain computer applies the static gain characteristic across each frequency band b, attenuating the signal below the individual threshold $T(b)$ defined for each band with the ratio $R$ and the knee in dB W. The inventors opt for a soft knee, which is defined by

$$X_L(t,b) = \begin{cases} X_a(t,b) & X_a(t,b) < (T(b) - \frac{w}{2}) \\ X_{L_{at}}(t,b) & (T(b) - \frac{w}{2}) \leq X_a(t,b) \leq (T(b) + \frac{w}{2}) \\ X_{L_{below}}(t,b) & X_a(t,b) > (T(b) + \frac{w}{2}) \end{cases} \quad (2)$$

where the reduction at the knee is given by

$$X_{L_{at}}(t,b) = Xa(t,b) + \frac{(1-R)(X_a(t,b) - T(b) - \frac{w}{2})^2}{2W} \quad (3)$$

and the reduction below the knee is given by

$$X_{L_{below}}(t,b) = T(b) + (Xa(t,b) - T(b)) \times R. \quad (4)$$

While it is possible to use a unique ratio and knee width for each band, the inventors opt to use the same ratio $R$ and knee width $W$ for each band. Only the threshold is unique to each band. The gain reduction in each band is then given by $X_G(t,b) = X_L(t,b) - X_A(t,b)$.

Afterwards a smoothing peak detector is applied, which produces the characteristic ballistics in dynamic range processors. This detector is implemented as a branching first-order recursive filter where the two filters have time constants $\alpha_A$ and $\alpha_R$ given by the attack and release times, $C_A$ and $C_R$, where $f_s$ is the audio sample rate and $H$ is the hop size

$$\alpha_A = \exp\left(\frac{-\log(9)}{\frac{f_s}{H} \times C_A}\right), \; \alpha_R = \exp\left(\frac{-\log(9)}{\frac{f_s}{H} \times C_R}\right) \quad (5)$$

The output of the smooth peak detector is

$$X_{G_S}(t) = \begin{cases} \alpha_A X_{G_S}(t-1) + (1 - \alpha_A)X_G(t) & X_G(t) \leq X_{G_S}(t-1) \\ \alpha_R X_{G_S}(t-1) + (1 - \alpha_R)X_G(t) & X_G(t) > X_{G_S}(t-1) \end{cases} \quad (6)$$

The b index is dropped for simplification. Finally, the gain reduction values are converted from the log-domain back to the linear domain.

Once the linear gain reduction is computed for each band, given by $X_{G_S}$, the synthesis filterbank $H_S$ is used to project the B bands back to the N frequency bins of the noisy magnitude spectrogram. Then, this mask is applied via multiplication with the original noisy magnitude spectrogram $|\hat{Y}| = |X| \odot (G \cdot X_{G_S})$ where $G$ is the optional gain adjustment in linear domain. Then the signal is converted back to the time domain using the inverse STFT and the original noisy phase for reconstruction.

While here a monophonic formulation is introduced, the noise reduction system can be extended to the multi-channel case in one of two ways. The simplest extension is a dual mono formulation where each input channel features a separate implementation of the. However, this can lead to perceivable distortions in the stereo image if significant gain reduction is applied to one channel. To address this the multi-channel noise reduction system can be operated in a "linked" mode where the energy in each band is the average between both channels, which can then be used as the side-chain signal to determine a shared gain reduction applied to both channels.

Spectral gating is conceptually related to deep learning approaches in speech enhancement that estimate a time-varying multiplicative mask for each frame of the magnitude spectrogram [Yuliani, A. R., Amri, M. F., Suryawati, E., Ramdan, A., and Pardede, H. F., "Speech enhancement using deep learning methods: A review," Jurnal Elektronika dan Telekomunikasi, 21(1), 2021]. However, unlike the deep learning approaches, the process of estimating the mask is based on a set of interpretable equations that dictate how fast and by how much the signal should be attenuated in each frequency band.

Neural network controller unit

The neural network controller unit preferably comprises multiple neural network subsystems.

Preferably, the neural network controller unit as illustrated in Figures 1, 2 and 3 is composed of three major components:

- an audio pre-processor, see Fig. 5

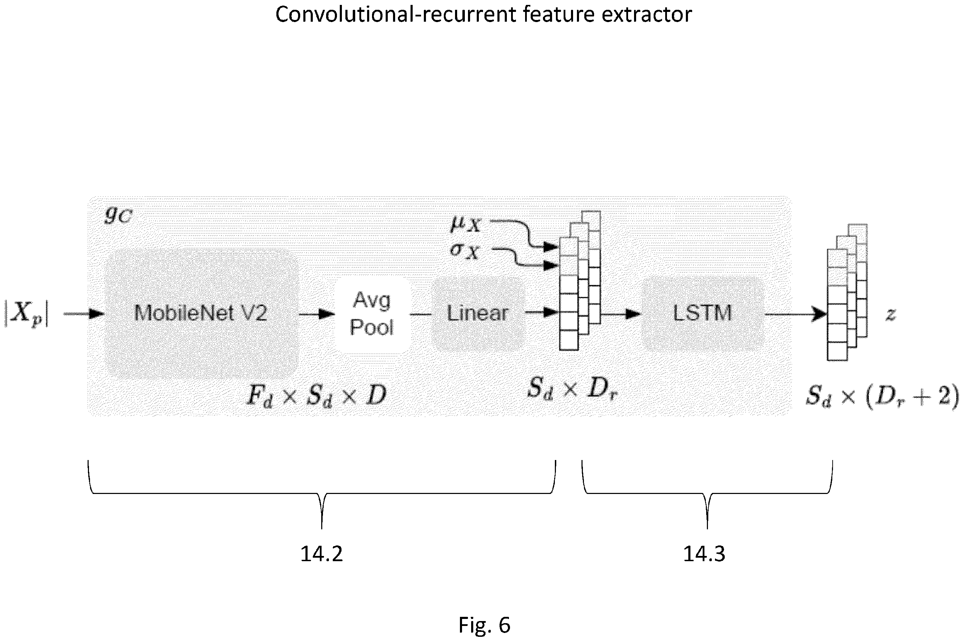

- a convolutional-recurrent feature extractor, see Fig. 6 and

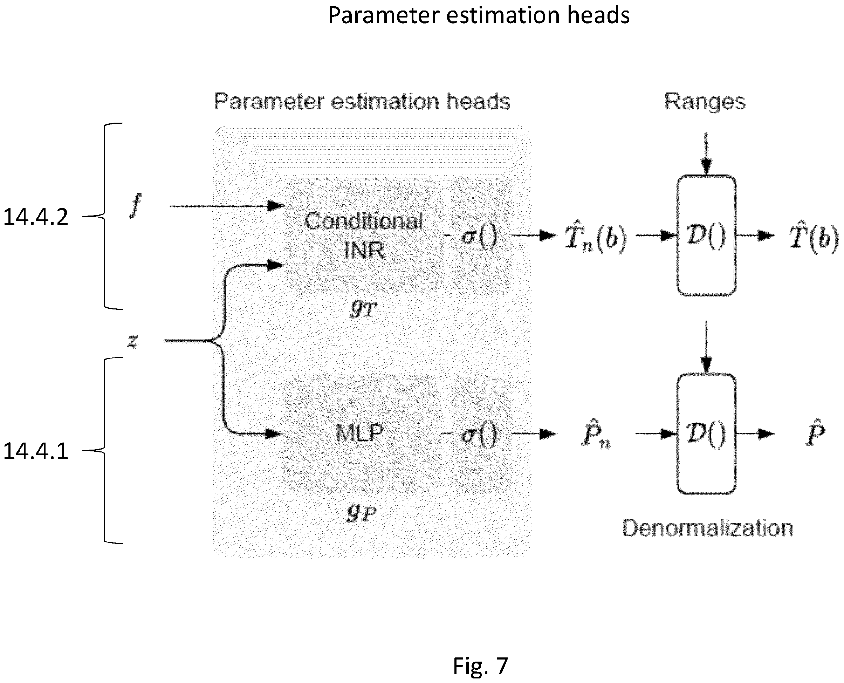

- specialized parameter estimation heads, see Fig. 7.

The neural network controller unit aims to extract relevant features from a noisy input signal $x(n)$ in order to estimate both the spectrum of the noise across the noise reduction unit frequency bands $\hat{T}(b)$ and the optimal noise reduction unit parameters $\hat{P} = \{C_A, C_R, W, R, G\}$, to effectively reduce the stationary noise component while introducing minimal artifacts.

The audio pre-processing as performed by the audio pre-processor begins by first transforming the time domain signal via short time Fourier transformation (STFT). This is followed by projection onto the mel-basis and exponential scaling with $|X|^\beta$. Finally, before passing the spectrogram to the feature extractor a Std-Norm, $|X_p| = \frac{|X|-\mu}{\sigma}$, is applied, which normalizes the magnitude spectrogram by its mean $\square$ and standard deviation $\square$.

As a core component of the neural network controller unit, a convolutional neural network, for instance a MobileNetV2 or MobileNetV3, is implemented as a feature extractor. The convolutional neural network is configured and trained to process spectrograms of the incoming audio signal and to generate (spectrum) feature maps therefrom. Subsequently, a Long Short-Term Memory (LSTM) network processes the sequence of (spectrum) feature maps generated by the convolutional neural network.

The main component of the neural network controller unit is a convolutional neural network, for instance a MobileNetV3 [Howard, A., Sandler, M., Chu, G., Chen, L.-C., Chen, B., Tan, M., Wang, W., Zhu, Y., Pang, R., Vasudevan, V., et al., "Searching for mobilenetv3," in CVPR, 2019], which is adapted by removing all BatchNorm layers, and modified to the input layer to operate on magnitude spectrograms as images with one channel. The output of the convolutional neural network, for instance the MobileNetV3, is a 3-dimensional down-sampled feature map. Average pooling is applied across the frequency dimension to produce a 2-dimensional representation of size $D \times S$, where $D$ is the feature dimension and $S$ is the down-sampled sequence length. This representation is then passed through a linear layer, shared across the temporal dimension, to reduce the feature dimension to a reduced feature dimension $D_r$. To provide information about the absolute scale of the input the frame-wise values of mean $\square$ and standard deviation $\square$ are concatenated to the representation in the reduced feature dimension $D_r$ and then passed through a Long short-term memory (LSTM) to produce the final sequence of latent representations $z \in \mathbb{R}^{Dr \times S}$.

Finally, two specialized parameter estimation heads are responsible for estimating the noise spectrum and the operation parameters of the dynamic noise reduction unit (expander parameters) $\hat{P}$, respectively.

The first network $g_P$ is tasked with predicting the noise reduction unit parameters $\hat{P}$ and is constructed as a simple 3-layer MLP, which operates on the latent representation $z$.

The second network $g_T$ is tasked with estimating the energy of the noise in each frequency band of the noise reduction unit $T(b)$. This network is implemented as a conditional implicit neural representation (INR) [Sitzmann, V., Martel, J., Bergman, A., Lindell, D., and Wetzstein, G., "Implicit neural representations with periodic activation functions," NeuIPS, 33, 2020], which features a combination of linear layers with sinusoidal activation functions, along with a modulator network. The modulator network produces scaling values for the intermediate feature representations of the INR based upon $z$, while $f$ represents a set of frequency index values at which the network is estimating the energy of the noise spectrum. The network architecture is motivated by the fact that the noise spectrum can itself be modelled as a continuous signal across the frequency range.

The neural network controller unit is trained by mixing noise with clean signals. The system is trained to estimate the clean signal using a reconstruction loss. However, this training process presents a challenge in the proposed system due to the need for backpropagation through the noise reduction unit, which is non-trivial. To overcome this, a two-stage approach is used. In the first stage, the convolutional neural network is trained to exclusively estimate the noise spectrum by directly regressing the spectrum of the ground truth noise, eliminating the necessity to operate the noise reduction unit. After this pretraining phase, the weights of the convolutional neural network are frozen and the MLP responsible for estimating the noise reduction unit control parameters is trained. To tackle the non-differentiability of the noise reduction unit, a gradient approximation method is employed. While this approach is generally prone to getting stuck in local minima and overall slower convergence, it was found that the pretraining phase significantly enhances performance and convergence speed during this training phase.

Training of the neural network controller unit

Since there are no optimal noise reduction unit parameters known a priori, to facilitate training of the controller network, one must backpropagate through the noise reduction unit by computing the error between the audio signal at the output of the noise reduction unit and the ground truth clean signal. This can be enabled by differentiable signal processing [Hayes, B., Shier, J., Fazekas, G., McPherson, A., and Saitis, C., "A Review of Differentiable Digital Signal Processing for Music & Speech Synthesis," arXiv:2308.15422, 2023]. Predominate approaches for differentiable signal processing include explicit automatic differentiation [Engel, J., Hantrakul, L., Gu, C., and Roberts, A., "DDSP: Differentiable digital signal processing," arXiv preprint arXiv:2001.04643, 2020], neural proxies [Steinmetz, C., Reiss, J., and Bryan, N., "Style transfer of audio effects with differentiable signal processing," JAES, 2022; Steinmetz, C., Reiss, J., and Bryan, N., "Style transfer of audio effects with differentiable signal processing," JAES, 2022], and gradient approximation [Ramirez, M. A. M., Wang, O., Smaragdis, P., and Bryan, N. J., "Differentiable signal processing with black-box audio effects," in ICASSP, 2021].

The design of an automatic differentiation dynamic range processor is problematic due to the ballistics, which implement switching or branching behaviour as described equation 6. While this branching is not exactly differentiable it can be implemented in an approximately differentiable manner. However, this formulation is generally not practical due to backpropagation through time at audio sample rate [Wright, A., Välimäki, V., et al., "Grey-box modelling of dynamic range compression," in DAFx, 2022]. This motivates simplified compressor designs with a single time constant [Steinmetz, C., Reiss, J., and Bryan, N., "Style transfer of audio effects with differentiable signal processing," JAES, 2022], or approximations of the behaviour without the recursion using two independent filters [Colonel, J., Reiss, J. D., et al., "Approximating Ballistics in a Differentiable Dynamic Range Compressor," in AES, 2022.

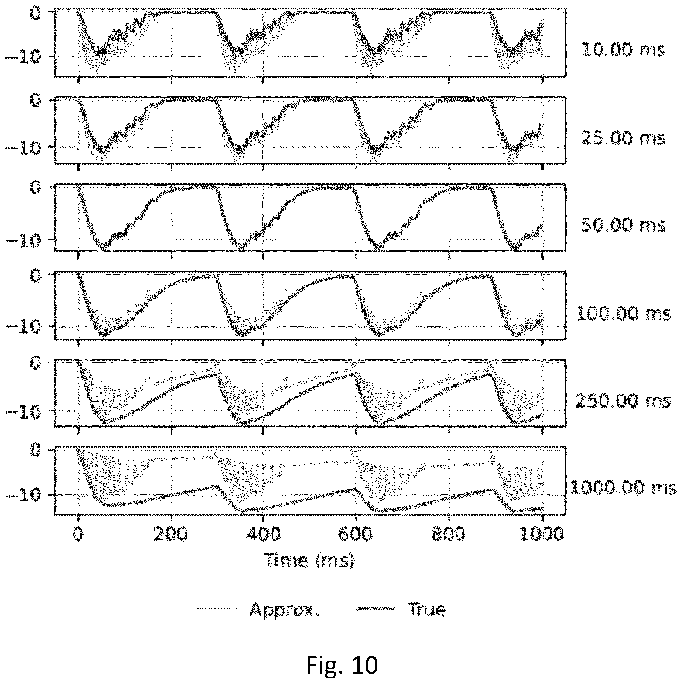

However, investigations revealed that these approaches are not sufficient to capture the behaviour of the ballistics when the attack and release times differ significantly. Fig. 10 illustrates the gain reduction at the output of a simple dynamic range compressor when using the true switching ballistics and the previously proposed approximation [Colonel, J., Reiss, J. D., et al., "Approximating Ballistics in a Differentiable Dynamic Range Compressor," in AES, 2022]. An attack time of 50 ms is used and the release time is varied from 10 ms to 1000 ms. When the difference between the attack and release are small the approximation is close to the true ballistics. However, as the release time increases the difference between the curves becomes significant and the behaviour at a release time of 250 ms and beyond. In cases where the attack and release time are similar the behaviour of the approximate revealeds are close to the recursive system, however, when the values are different in magnitude the behaviour deviates significantly.

While it would be possible to completely avoid backpropagation through the noise reduction unit by simply training the controller to predict only the noise threshold $T(b)$, which could be done by computing a loss on the output of $g_T$ using the ground truth noise signal, the inventors found using the ground truth noise spectrum threshold directly does not result in optimal performance. Instead, manual adjustment of the overall thresholds as well as the other noise reduction unit parameters should be adapted for each input.

To facilitate training gradient approximation was used. Leveraging stochastic simultaneous perturbation approximation (SPSA) [Spall, J. C., "Multivariate stochastic approximation using a simultaneous perturbation gradient approximation," IEEE Transactions on Automatic Control, 37(3), 1992] provides a more scalable approach than finite differences (FD), however, the inventors found training the noise reduction system in this manner both slow and prone to instability, hindering performance.

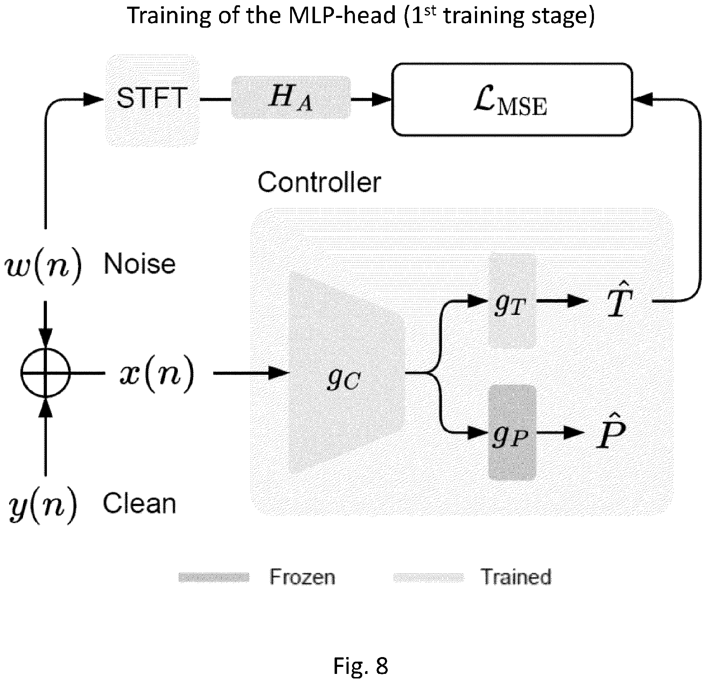

According to the preferred embodiment, the first stage involves pre-training the majority of the weights of the proposed neural network controller using a simple supervised task to estimate the noise spectrum; cf. Fig. 8.

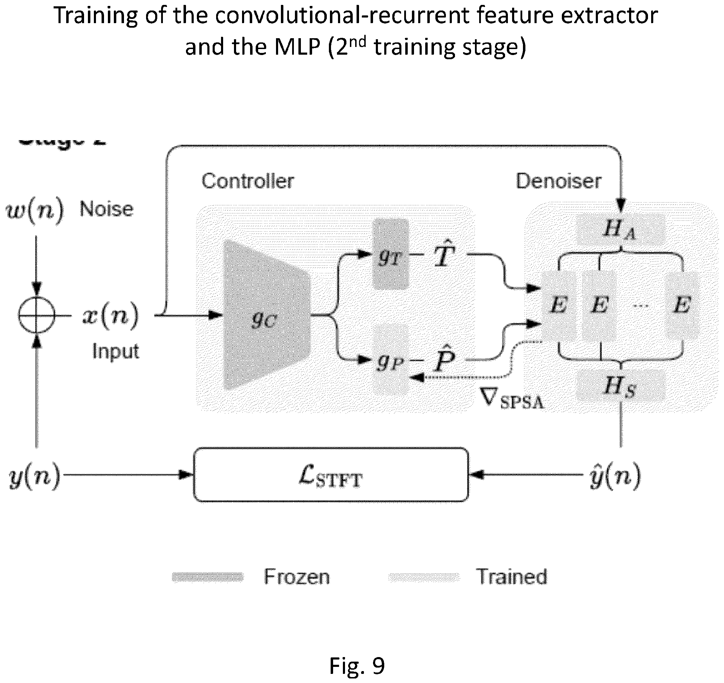

Then in the second stage most of the weights are frozen and only small MLPs using approximate gradients based on stochastic simultaneous perturbation approximation (SPSA) are trained; cf. Fig. 9. During the second stage the loss between the denoised audio signal $\hat{y}(n)$ and the ground truth clean signal $y(n)$ is computed, using the multi-resolution STFT loss [Yamamoto, R., Song, E., and Kim, J.-M., "Parallel WaveGAN: A fast waveform generation model based on generative adversarial networks with multi-resolution spectrogram," in ICASSP, 2020] in auraloss [Steinmetz, C. J. and Reiss, J. D., "auraloss: Audio focused loss functions in PyTorch," in Digital Music Research Network One-day Workshop (DMRN+15), 2020] with window sizes 256,1024, 4096, 16384. Normally this approach is inefficient for training large neural networks over many gradient steps since approximating gradients requires running the noise reduction unit multiple times per batch item, which is often CPU bound.

While the model is trained on monophonic audio, support for multichannel operation, including stereo operation, is supported in one of two ways, either linked, or unlinked. In unlinked operation the controller network is run independently on the channels to produce a sequence of control parameters that update every 6 seconds. Then an up-sampled sequence of control parameters that change at every STFT frame is produced by linearly interpolating between the control parameter values.

Once trained, the noise reduction system 10 as disclosed above, when in use, performs a method for dynamic noise reduction comprising the steps of

S1    Feeding an input audio signal x(n) to both, the dynamic noise reduction unit 12 and the neural network controller unit 14,

S2    Performing parametric noise reduction in multiple frequency bands of an audio signal by applying operation parameters for each frequency band, thus generating a denoised output audio signal $\hat{Y}(n)$,

S3    Dynamically determining the operation parameters for each frequency band by means of the trained neural network control unit 14; and

S4    applying the dynamically determined operation parameters for each frequency band for the parametric noise reduction and the multiple frequency bands.

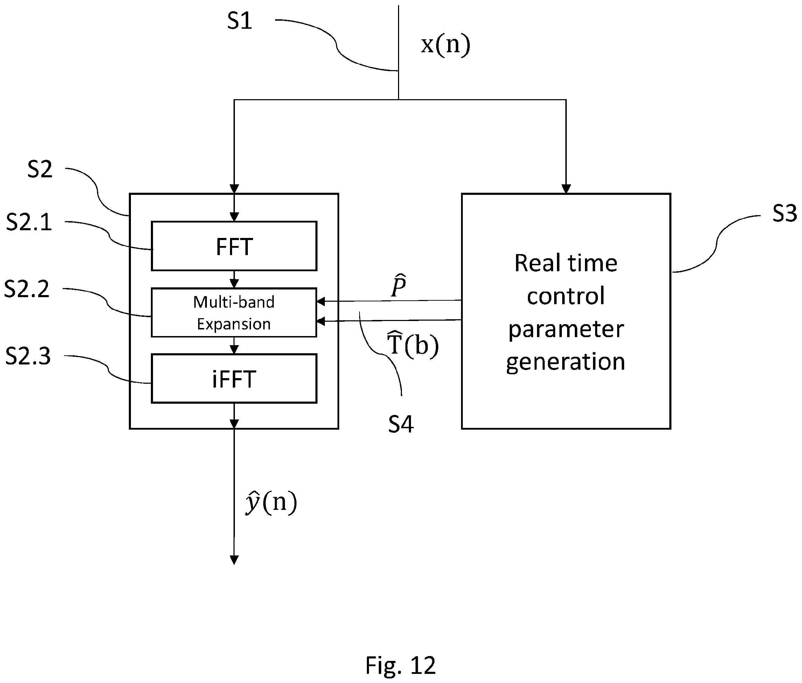

The method is illustrated in Fig. 12. The steps S2 performing parametric noise reduction in multiple frequency bands and S3 of dynamically determining the operation parameters for the noise reduction in each frequency band are performed in parallel. However, the analysis of the audio signal or determining the operation parameters is completely independent of the step to perform parametric noise reduction.

As disclosed above, the dynamically determined operation parameters preferably include gain reduction values for each individual frequency band and the dynamic noise reduction preferably is a bandwise expansion or compression on each frequency band based on the individual gain reduction values. It is noted, that the gain reduction values can be within the range between 0 and 1 and thus would cause a real gain reduction. Alternatively, the gain reduction values could be values that indeed lead to a larger amplification in a respective frequency band. Accordingly, the multi-band expander could also be called a multi-band compressor because it compresses some frequency bands. Likewise, the multi-band expansion in essence can be a multi-band compression for suppressing noise.

As also disclosed above, the spectral expansion (or compression) of multiple frequency bands, i.e. method step S2 comprises sub steps such as

S2.1    a Fourier transformation of the incoming audio signal to generate a frequency domain representation of the incoming audio signal,

S2.2    a spectral expansion in the multiple frequency bands of the frequency-domain representation of the input audio signal, and

S2.3    an inverse Fourier transformation for generating a time-domain representation of the denoised output audio signal $\hat{y}(n)$.

Experiments

To train the noise reduction models noisy examples are constructed by combining noise-free sources with largely stationary noises. To facilitate generalization and expose the models to a wide range of sources a number of existing datasets in the proposed synthetic data generation pipeline are combined. VCTK [Yamagishi, J. et al., "CSTR VCTK corpus: English multispeaker corpus for cstr voice cloning toolkit," University of Edinburgh. The Centre for Speech Technology Research (CSTR), 2019] is included for speech, GuitarSet [Xi, Q., Bittner, R. M., Pauwels, J., Ye, X., and Bello, J. P., "GuitarSet: A Dataset for Guitar Transcription." in ISMIR, 2018] is included for acoustic guitar and VocalSet [Wilkins, J., Seetharaman, P., Wahl, A., and Pardo, B., "VocalSet: A Singing Voice Dataset." in ISMIR, 2018] for vocals, and DSD100 [Liutkus, A. et al., "The 2016 Signal Separation Evaluation Campaign," in LVA/ICA, Cham, 2017] is included for general instrumentation. Noise recordings are sourced from three sources. These include purely synthetic noises that were generated by filtering white noise, recordings collected from Freesound, along with a set of recordings that were collected using mobile phones.

During training audio segments 262144 samples in length at $f_s$ = 44.1 kHz ($\approx$ 6 sec) were randomly sampled, one from a source dataset, and one from a noise dataset. Then, a set of data augmentations was applied to each. Additionally, to increase robustness to room reverberation, at random either the source or the linear combination of the noise and source were convolved, with a randomly sampled impulse response. Impulse responses from the MIT IR Survey [Traer, J. and McDermott, J. H., "Statistics of natural reverberation enable perceptual separation of sound and space," Proceedings of the National Academy of Sciences, 113(48), 2016] and the EchoThief Impulse Response Library3 were sourced. In addition to reverberation, also random augmentations including time stretching, pitch shifting, MP3 compression, time-varying gain, and random filtering were applied. The source and noise signals were combined with random scaling factors such that the relative difference in perceptual loudness between the two is sampled uniformly between -48 dB and - 12 dB.

Table 1: Models evaluated on held out test data and noise from Tape It Noise.

| Approach | VCTK | | | DSD100 | | | GuitarSet | | | VocalSet | | |
|---|---|---|---|---|---|---|---|---|---|---|---|---|
| | SI-SDR | STFT | FAD | SI-SDR | STFT | FAD | SI-SDR | STFT | FAD | SI-SDR | STFT | FAD |
| Input | 27.9 | 0.518 | 7.52 | 28.99 | 0.488 | 2.94 | 28.33 | 0.491 | 1.87 | 27.4 | 0.829 | 6.25 |
| noisereduce | 5.73 | 1.571 | 4.19 | 6.39 | 1.678 | 8.55 | 6.62 | 1.499 | 506 | 8.09 | 1.407 | 7.01 |
| RNNoise | 12.7 | 0.606 | 2.89 | 1.80 | 1.400 | 9.27 | 8.77 | 0.792 | 2.96 | 6.58 | 1.115 | 8.66 |
| HDemucs | 29.9 | 0.208 | 1.59 | 29.63 | 0.192 | 1.64 | 3004 | 0.207 | 1.17 | 34.5 | 0.307 | 1.34 |
| HDemucs (DNS) | 29.2 | 0.236 | 1.26 | 28.84 | 0.246 | 1.92 | 29.01 | 0.240 | 1.08 | 32.6 | 0.349 | 1.60 |
| DCUNet | 27.26 | 0.242 | 102 | 24.46 | 0.246 | 1.48 | 25.42 | 0.237 | 0.67 | 28.9 | 0.375 | 108 |
| Tape It | 28.72 | 0.406 | 3.60 | 29.03 | 0.388 | 2.30 | 29.01 | 0.370 | 1.10 | 300 | 0.614 | 4.12 |
| Tape It (Stage 1) | 26.98 | 0.459 | 3.20 | 28.42 | 0.418 | 2.16 | 28.34 | 0.409 | 1.17 | 30.1 | 0.621 | 373 |

To validate the approach, the approach was compared against a set of strong baselines with both objective metrics and a perceptual listening test. A comparable hybrid approach, RNNoise [Valin, J.-M., "A hybrid DSP/deep learning approach to realtime full-band speech enhancement," in MMSP, 2018], and noisereduce [Sainburg, T., Thielk, M., and Gentner, T. Q., "Finding, visualizing, and quantifying latent structure across diverse animal vocal repertoires," PLoS computational biology, 16(10), 2020], were considered as baselines. To form stronger baselines, also existing speech enhancement models, Hybrid Demucs (HDemucs) [Défossez, A., "Hybrid spectrogram and waveform source separation,"arXiv preprint arXiv:2111.03600, 2021] and DCUNet [Choi, H.-S., Kim, J.-H., Huh, J., Kim, A., Ha, J.-W., and Lee, K., "Phase-aware speech enhancement with deep complex unet,"in ICLR, 2018] were adapted, which were trained using the data generation pipeline disclosed herewith. iZotope RX Spectral Denoise was considered as a commercial system, however it is included only in the perceptual evaluation since there is not a scalable way to run this noise reduction system across the test set.

Two further experiments were conducted to better understand aspects of the proposed data generation pipeline as well as the proposed two-stage training procedure. First, to investigate the effect of directly adapting existing speech enhancement pipelines to the general noise reduction task, a variant of HDemucs using the same four source datasets was trained, but instead using source noise from DNS, an existing large-scale noise dataset [Dubey, H., Gopal, V., Cutler, R., Aazami, A., Matusevych, S., Braun, S., Eskimez, S. E., Thakker, M., Yoshioka, T., Gamper, H., et al., "Icassp 2022 deep noise suppression challenge," in ICASSP, 2022] was used. This enables to compare the impact of training the model to remove both stationary and non-stationary noise. Second, the benefit of the two-stage training approach was investigated by using a variant of the proposed model that uses only the first stage of training and therefore uses a set of manually selected noise reduction unit parameters.

All models are trained with AdamWwith an initial learning rate of $1 \cdot 10^{-4}$ for a total of 200 k steps. The learning rate was reduced by a factor of 10 at 80% and 95% through the training process. For the proposed two stage training process, noise spectrum estimation was first trained for 150 k steps and the remaining 50 k steps were trained using gradient approximation with e = 0.01. The magnitude of gradients were clipped to 4.0. The batch size was set to the largest value that will fit in memory on a single 16GB T4 GPU, enabling DCUNet to be trained with a batch size of 16, HDemucs with a batch size of 4, and the proposed model with a batch size of 32.

Results

Objective evaluation

SI-SDR, FAD [Kilgour, K., Zuluaga, M., Roblek, D., and Sharifi, M., "Fréchet audio distance: A reference-free metric for evaluating music enhancement algorithms." in INTERSPEECH, 2019], and the multi-resolution STFT are reported in Table 1 across 1000 examples from held out test data using the four source datasets. The traditional signal processing baseline, noisereduce, performs poorly across all metrics and datasets. RNNoise performs somewhat better, however it does not bring an improvement over the input when considering the full reference metrics, only in FAD when considering speech. It is noted that FAD is significantly higher for the non-speech sources, since RNNoise was trained only on speech. All models that were trained brought an improvement compared to the input on all metrics and across both speech and music. HDemucs achieves superior performance in the full reference metrics across all datasets, however, DCUNet outperforms in FAD. It was found that the proposed method performs comparably to HDemucs and DCUNet, yet somewhat worse in all metrics.

Table 2: Listening test stimlui

| ID | Source |
|---|---|
| A | Female speech |
| B | Organ in cathedral |
| C | Female vocal |
| D | Electric guitar* (omitted) |
| E | Bird calls |
| F | Acoustic guitar (high noise) |
| G | Acoustic guitar and male vocal |
| H | Jazz ensemble with trumpet |
| I | Solo piano |
| J | Male speech |
| K | Ukulele |
| L | Male vocal |

From the ablation study it was found that training HDemucs with noise from DNS dataset does result in a small decrease in SI-SDR, and a somewhat more significant decrease in STFT performance. Interestingly, FAD scores are better in the case of speech and GuitarSet. When comparing the proposed approach using only the Stage 1 training a noticeable decrease in performance for SI-SDR and STFT was observed, yet FAD is improved. Similar to the findings with superior FAD performance for DCUNet, it is hypothesized this is due greater reduction of the noise as compared to other methods, however, from the inventors listening this comes at the cost of distortion to the source signal.

Perceptual evaluation

To better understand the noise reduction performance a perceptual evaluation was designed using the Go Listen platform [Barry, D., Zhang, Q., Sun, P. W., and Hines, A., "Go listen: an end-to-end online listening test platform," Journal of Open Research Software, 9(1), 2021]. To evaluate the systems twelve realistic recordings containing audible, yet largely stationary background noises were selected, covering a range of content types, as shown in Table 2. A total of 26 participants who self-reported experience in critical listening and have no known hearing impairments were enlisted to complete the evaluation. Participants were presented with a noisy recording, which was marked as the reference, along with five other stimuli. Four methods were included in the evaluation: Tape It (the proposed method), Tape It (only Stage 1 training), HDemucs, HDemucs (DNS), and iZotope RX Spectral Denoise. Also a hidden version of the noisy reference was included, which they were instructed to give a score of 50. Participants were asked to provide a score from 50 to 100 to reflect how much they preferred the recording compared to the reference, or to provide a score less than 50, from 0 to 50, if they felt a method harmed performance.

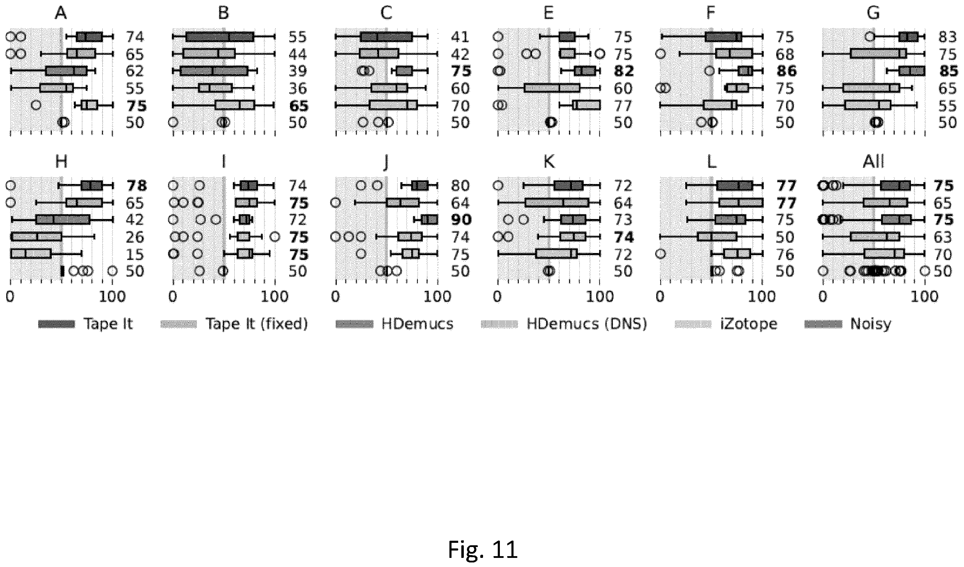

Fig. 11 illustrates the scores across the eleven stimuli listed in table 2. The median values are denoted for each method on the right with the best performing method shown in boldface. Scores below 50 denote lower preference as compared to the noisy input, which is shaded as the grey region in each plot. "All" denotes aggregated scores across all stimuli.

Post-filtering of the results was performed, removing responses from any participants who rated the hidden reference recording more than $\pm 10$ away from the target score 50 in more than 2 recordings, leaving responses from 18 participants. It was found many participants were unable to easily detect the noise in stimulus D, so it was omitted from the analysis. Scores across the eleven stimuli are shown in Fig. 11 with stimuli described in Table 2. The region below 50 was denoted in gray to make clear that scores in this area mean participants felt the method *harmed* performance as compared to the original noisy recording.

Table 3: Real-time factor running on CPU and GPU

| Approach | Params | Real-time factor | |
|---|---|---|---|
| | | CPU | GPU |
| DCUNet | 2.37M | 2.14 | 12.8 |
| HDemucs | 83.6M | 1.80 | 10.7 |
| noisereduce | - | 25.2 | - |
| RNNoise | 87.5 k | **39.9** | - |
| Tape It | 4.57M | 26.8 | **44.9** |

Significant variance in performance among the methods between different recordings was found. For example, HDemucs significantly outperforms other approaches in J and E, while Tape It shows strong performance in H, where other methods struggle, showing median scores below 50. When looking at the aggregate scores (All) it can be seen that the median scores for Tape It and HDemucs are equal at 75, followed by iZotope at 70. Tape It with Stage 1 training (65) and HDemucs (DNS) (63) perform noticeably worse.

To formalize these findings first the Kruskal-Wallis test was performed and a significant difference among the medians of the methods ($p = 1.60 \cdot 10^{-33}$) was found. Then Dunn's test was applied performing all pairwise comparisons of the medians between the methods using the Bonferroni correction. First, it was found that the differences in median scores of Tape It and HDemucs (DNS) and the noisy input signal are significant ($p_{adj} = 0.0004$) and ($p_{adj} = 4.06 \cdot 10^{-22}$). However, the difference in the medians for Tape It compared to HDemucs or iZotope was not found significant.

Efficiency

The real-time factor of the proposed method and baselines is reported in Table 3. The real-time factor is how much faster than real-time audio is processed by each method, using an input length of 12 seconds. Timings are averaged across 100 runs on both CPU and GPU on a machine with a Intel(R) Xeon(R) Platinum 8259CL CPU @ 2.50GHz and a NVIDIA Tesla T4 16GB GPU. The proposed method is able to achieve a real-time factor up to 18 times faster than HDemucs when running inference on CPU.

Conclusion

In this work, a system for noise reduction is presented that combines a traditional spectral gating noise reduction unit with a neural network controller, enabling high-fidelity noise reduction for both speech and music signals. The challenges in integrating this noise reduction unit within a gradient-based machine learning paradigm are outlined and a two-stage training approach that combines supervised pretraining with a gradient approximation scheme in order to facilitate automatic control of the noise reduction unit is proposed. Both an objective evaluation and a subjective listening test were conducted and it was found that the proposed approach performed on par with strong deep learning baselines as well as an industry standard noise reduction system. The proposed method achieves this while being fully automatic, interpretable, controllable, and an order of magnitude more efficient than other deep learning approaches. Future work could consider further improvements to the spectral gating noise reduction unit architecture that improve perceptual performance, and low-latency operation could be achieved with the integration of time domain filterbanks.

**Claims**

1.  Noise reduction system (10) for dynamic noise reduction comprising an input for an incoming audio signal and an audio out-put for providing a noise reduced output audio signal,

    said noise reduction system (10) further comprising a parametric noise reduction unit (12) that is configured to perform a noise reduction according to operation parameters, the values thereof being at least in part adjustable, **characterized in that** the noise reduction system (10) comprises or is connected to a trained neural network controller unit (14) that is configured to process input data generated from the incoming audio signal and to generate operation parameter values for dynamically controlling the parametric noise reduction unit.

2.  Noise reduction system according to claim 1 wherein the parametric noise reduction unit (12) implements a signal processing-based spectral gating noise reduction algorithm.

3.  Noise reduction system according to claim 1 or 2, wherein the incoming audio signal and the noise reduced output audio signal are digital signals.

4.  Noise reduction system according to at least one of claims 1 or 3, wherein the trained neural network controller unit (14) comprises multiple neural network subsystems.

5.  Noise reduction system according to claim 4, wherein the trained neural network controller unit (14) comprises a convolutional neural network (14.2, 14.3) trained as feature extractor, wherein the convolutional neural network (14.2, 14.3) is configured to process CNN input data representing a spectrogram of the incoming audio signal and to generate feature maps of the audio input signal.

6.  Noise reduction system according to claim 5 wherein the trained neural network unit (14) comprises a Long Short-Term Memory (LSTM) neural network (14.3) that is configured to process a sequence of feature maps generated by the convolutional neural network (14.2).

7.  Noise reduction system according to at least one of claims 1 to 6, wherein the trained neural network controller unit (14) comprises at least two specialized parameter estimation heads (14.4.1 , 14.4.2), a first parameter estimation head (14.4.1) configured for estimating the noise spectrum and a second parameter estimation head (14.4.2) configured for estimating the operation parameters of the parametric noise reduction unit.

8.  Noise reduction system according to claims 6 and 7, wherein the least two specialized parameter estimation heads (14.4.1, 14.4.2) are configured to process the output of the Long Short-Term Memory (LSTM) neural network (14.3).

9.  Noise reduction system according to claims 6 and 7, wherein the first specialized parameter estimation head (14.4.1) for predicting the operating parameters is a neural network that is configured as a simple 3-layer multi-layer perceptron (MLP), which operates on a latent representation z produced by the Long Short-Term Memory (LSTM) neural network.

10. Noise reduction system according to at least one of claims 6 to 9, wherein the second specialized parameter estimation head (14.4.2) for estimating the energy of the noise T(b) in each frequency band of the dynamic noise reduction unit is implemented as a conditional implicit neural representation (INR), which comprises a combination of linear layers with sinusoidal activation functions, along with a modulator network.

11. Method for dynamic noise reduction comprising the steps of:

    - feeding an input audio signal to both, a dynamic noise reduction unit and a neural network controller unit (S1)
    - performing parametric noise reduction in multiple frequency bands of an input audio signal by applying operation parameters for each frequency band, thus generating a denoised output audio signal (S2),
    - dynamically determining the operation parameters for each frequency band by means of a trained neural network controller unit (S3), and
    - applying the dynamically determined operation parameters for each frequency band in the parametric multi-band noise reduction of the input audio signal (S4).

12. Method according to claim 11, wherein the parametric noise reduction includes a spectral expansion in multiple frequency bands of an input audio signal.

13. Method according to claim 11 or 12, wherein the operation parameters include an individual gain reduction value for each frequency band.

14. Method according to claim 13, wherein the individual gain reduction values for the frequency bands are determined by means of a trained neural network controller unit.

15. Method according to at least one of claims 11 to 14, wherein parametric noise reduction in multiple frequency bands of an input audio signal is performed by applying a signal processing-based spectral gating noise reduction algorithm.

self adjusting noise reduction system

Fig. 1

# Denoiser with controlling NN unit (Controller)

Fig. 2

EP 4 531 042 A1

Fig. 3

# Denoiser (signal processing-based noise reduction unit )

STFT: short time fourier transformation
iSTFT: inverse short time fourier transformation

Fig. 4

EP 4 531 042 A1

Audio Preprocessor

14.1

$x(n)$ — STFT — $|X|$ — mel — pow — StdNorm — $|X_p|$

$\mu_X$

$\sigma_X$

$F \times S$

Fig. 5

Convolutional-recurrent feature extractor

Fig. 6

# Parameter estimation heads

Fig. 7

EP 4 531 042 A1

Training of the MLP-head (1st training stage)

Fig. 8

EP 4 531 042 A1

# Training of the convolutional-recurrent feature extractor and the MLP (2$^{nd}$ training stage)

Fig. 9

Fig. 10

Fig. 11

Fig. 12

| | Europäisches Patentamt<br>European Patent Office<br>Office européen des brevets | **EUROPEAN SEARCH REPORT** | **Application Number**<br>**EP 23 20 0672** |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | WO 2022/107393 A1 (UNIV COLUMBIA [US];<br>SOFTBANK CORP [JP])<br>27 May 2022 (2022-05-27)<br>* paragraph [0004] – paragraph [0005] *<br>* paragraph [0020] *<br>* paragraph [0041] *<br>* paragraph [0062] *<br>* figure 1 *<br>* paragraph [0018] – paragraph [0020] *<br>* paragraph [0007] – paragraph [0008] *<br>----- | 1-15 | INV.<br>G10L25/30<br>G10L21/0208<br>G10L21/0232<br>G06N3/00 |
| A | LUCA A LANZEND\"ORFER ET AL: "Siamese<br>SIREN: Audio Compression with Implicit<br>Neural Representations",<br>ARXIV.ORG, CORNELL UNIVERSITY LIBRARY, 201<br>OLIN LIBRARY CORNELL UNIVERSITY ITHACA, NY<br>14853,<br>22 June 2023 (2023-06-22), XP091545150,<br>* figure 1 *<br>----- | 10 | |
| T | CHRISTIAN J STEINMETZ ET AL:<br>"High-Fidelity Noise Reduction with<br>Differentiable Signal Processing",<br>ARXIV.ORG, CORNELL UNIVERSITY LIBRARY, 201<br>OLIN LIBRARY CORNELL UNIVERSITY ITHACA, NY<br>14853,<br>17 October 2023 (2023-10-17), XP091638076,<br>----- | | **TECHNICAL FIELDS**<br>**SEARCHED (IPC)**<br><br>G10L |

The present search report has been drawn up for all claims

| Place of search | Date of completion of the search | Examiner |
|---|---|---|
| The Hague | 2 February 2024 | Stan, Guy-Bart |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 0672

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2024

| Patent document cited in search report | Publication date | Patent family member(s) | | Publication date |
|---|---|---|---|---|
| WO 2022107393 A1 | 27-05-2022 | JP | 2023552090 A | 14-12-2023 |
| | | US | 2023306981 A1 | 28-09-2023 |
| | | WO | 2022107393 A1 | 27-05-2022 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **WIENER, N.** Extrapolation, interpolation, and smoothing of stationary time series, with engineering applications. MIT Press, 1964
- **BOLL, S.** Suppression of acoustic noise in speech using spectral subtraction. *IEEE TASLP*, 1979, vol. 27 (2)
- **HICKS, C.** ; **REID, G.** The evolution of broadband noise reduction techniques. *AES*, 1996
- **YULIANI, A. R.** ; **AMRI, M. F.** ; **SURYAWATI, E.** ; **RAMDAN, A.** ; **PARDEDE, H. F.** Speech enhancement using deep learning methods: A review. *Jurnal Elektronika dan Telekomunikasi*, 2021, vol. 21 (1)
- **KANDPAL, N.** ; **NIETO, O.** ; **JIN, Z.** Music enhancement via image translation and vocoding. *ICASSP*, 2022
- **MOLINER, E.** ; **VÄLIMÄKI, V.** A two-stage u-net for highfidelity denoising of historical recordings. *ICASSP*, 2022
- **CHAE, Y.** ; **KOO, J.** ; **LEE, S.** ; **LEE, K.** Exploiting Time-Frequency Conformers for Music Audio Enhancement. *arXiv:2308.12599*, 2023
- **HOWARD, A.** ; **SANDLER, M.** ; **CHU, G.** ; **CHEN, L.-C.** ; **CHEN, B.** ; **TAN, M.** ; **WANG, W.** ; **ZHU, Y.** ; **PANG, R.** ; **VASUDEVAN, V. et al.** Searching for mobilenetv3. *CVPR*, 2019
- **HICKS, C.** ; **REID, G**. The evolution of broadband noise reduction techniques. *AES*, 1996
- **MOORER, J. A.** ; **BERGER, M.** Linear-phase bandsplitting: Theory and applications. *JAES*, 1986, vol. 34 (3)
- **HICKS, C** ; **REID, G.** The evolution of broadband noise reduction techniques. *AES*, 1996
- **LUKIN, A.** ; **TODD, J.** Suppression of musical noise artifacts in audio noise reduction by adaptive 2-D filtering. *AES*, 2007
- **GIANNOULIS, D.** ; **MASSBERG, M.** ; **REISS, J. D.** Digital dynamic range compressor design - A tutorial and analysis. *JAES*, 2012, vol. 60 (6)
- **HOWARD, A.** ; **SANDLER, M.** ; **CHU, G.** ; **CHEN, L.-C.** ; **CHEN, B.** ; **TAN, M.** ; **WANG, W** ; **ZHU, Y.** ; **PANG, R.** ; **VASUDEVAN, V. et al.** Searching for mobilenetv3. *CVPR*, 2019
- **SITZMANN, V.** ; **MARTEL, J.** ; **BERGMAN, A.** ; **LINDELL, D.** ; **WETZSTEIN, G.** Implicit neural representations with periodic activation functions. *NeuIPS*, 2020, vol. 33
- **HAYES, B.** ; **SHIER, J.** ; **FAZEKAS, G** ; **MCPHERSON, A.** ; **SAITIS, C.** A Review of Differentiable Digital Signal Processing for Music & Speech Synthesis. *arXiv:2308.15422*, 2023
- **ENGEL, J.** ; **HANTRAKUL, L.** ; **GU, C.** ; **ROBERTS, A.** DDSP: Differentiable digital signal processing. *arXiv preprint arXiv:2001.04643*, 2020
- **STEINMETZ, C.** ; **REISS, J.** ; **BRYAN, N.** Style transfer of audio effects with differentiable signal processing. *JAES*, 2022
- **STEINMETZ, C** ; **REISS, J.** ; **BRYAN, N.** Style transfer of audio effects with differentiable signal processing. *JAES*, 2022
- **RAMIREZ, M. A. M.** ; **WANG, O.** ; **SMARAGDIS, P.** ; **BRYAN, N. J.** Differentiable signal processing with black-box audio effects. *ICASSP*, 2021
- **WRIGHT, A.** ; **VÄLIMÄKI, V. et al.** Grey-box modelling of dynamic range compression. *DAFx*, 2022
- **STEINMETZ, C.** ; **REISS, J** ; **BRYAN, N.** Style transfer of audio effects with differentiable signal processing. *JAES*, 2022
- **COLONEL, J.** ; **REISS, J. D. et al.** Approximating Ballistics in a Differentiable Dynamic Range Compressor. *AES*, 2022
- **SPALL, J. C.** Multivariate stochastic approximation using a simultaneous perturbation gradient approximation. *IEEE Transactions on Automatic Control*, 1992, vol. 37 (3)
- **YAMAMOTO, R.** ; **SONG, E.** ; **KIM, J.-M.** Parallel WaveGAN: A fast waveform generation model based on generative adversarial networks with multi-resolution spectrogram. *ICASSP*, 2020
- **STEINMETZ, C. J.** ; **REISS, J. D.** auraloss: Audio focused loss functions in PyTorch. *Digital Music Research Network One-day Workshop (DMRN+15)*, 2020
- **YAMAGISHI, J. et al.** CSTR VCTK corpus: English multispeaker corpus for cstr voice cloning toolkit. University of Edinburgh. The Centre for Speech Technology Research (CSTR), 2019
- **XI, Q.** ; **BITTNER, R. M.** ; **PAUWELS, J.** ; **YE, X.** ; **BELLO, J. P**. GuitarSet: A Dataset for Guitar Transcription. *ISMIR*, 2018
- **WILKINS, J.** ; **SEETHARAMAN, P.** ; **WAHL, A.** ; **PARDO, B.** VocalSet: A Singing Voice Dataset. *ISMIR*, 2018
- **LIUTKUS, A. et al.** The 2016 Signal Separation Evaluation Campaign. *LVA/ICA, Cham*, 2017

- **TRAER, J.** ; **MCDERMOTT, J. H.** Statistics of natural reverberation enable perceptual separation of sound and space. *Proceedings of the National Academy of Sciences*, 2016, vol. 113 (48)
- **VALIN, J.-M.** A hybrid DSP/deep learning approach to realtime full-band speech enhancement. *MMSP*, 2018
- **SAINBURG, T.** ; **THIELK, M.** ; **GENTNER, T. Q.** Finding, visualizing, and quantifying latent structure across diverse animal vocal repertoires. *PLoS computational biology*, 2020, vol. 16 (10)
- **DÉFOSSEZ, A.** Hybrid spectrogram and waveform source separation. *arXiv preprint arXiv:2111.03600*, 2021
- **CHOI, H.-S.** ; **KIM, J.-H.** ; **HUH, J.** ; **KIM, A.** ; **HA, J.-W.** ; **LEE, K.** Phase-aware speech enhancement with deep complex unet. *ICLR*, 2018
- **DUBEY, H.** ; **GOPAL, V.** ; **CUTLER, R.** ; **AAZAMI, A.** ; **MATUSEVYCH, S.** ; **BRAUN, S.** ; **ESKIMEZ, S. E.** ; **THAKKER, M.** ; **YOSHIOKA, T** ; **GAMPER, H. et al.** Icassp 2022 deep noise suppression challenge. *ICASSP*, 2022
- **KILGOUR, K.** ; **ZULUAGA, M.** ; **ROBLEK, D.** ; **SHARIFI, M.** Fréchet audio distance: A reference-free metric for evaluating music enhancement algorithms. *INTERSPEECH*, 2019
- **BARRY, D.** ; **ZHANG, Q.** ; **SUN, P. W.** ; **HINES, A.** Go listen: an end-to-end online listening test platform. *Journal of Open Research Software*, 2021, vol. 9 (1)